# EUROPEAN PATENT APPLICATION

(11) **EP 2 871 566 A1**
(43) Date of publication of application: **13.05.2015**
(21) Application number: 13812961.4
(22) Date of filing: 03.04.2013
(51) Int. Cl.: G06F 3/0482, G06F 3/0481

(54) **INFORMATION PROCESSING DEVICE, CONTROL METHOD THEREFOR, AND PROGRAM**

(30) Priority: 04.07.2012 JP 2012150314
(71) Applicant: NEC CASIO Mobile Communications, Ltd., Kawasaki-shi Kanagawa 211-8666 (JP)
(72) Inventor: KAMIYAMA, Yoshiyuki, Kawasaki-shi Kanagawa 211-8666 (JP)
(74) Representative: Vossius & Partner Patentanwälte Rechtsanwälte mbB
(86) International application number: PCT/JP2013/060155
(87) International publication number: WO 2014/006946

(57) **Abstract**

An information processing device that is equipped with a plurality of applications and includes: a display unit that displays a menu screen for selecting an application from among the plurality of applications; and a control unit that detects the frequency of use of each of the plurality of applications, generates a menu screen that shows, from among the plurality of applications, applications in which the detected frequency of use is equal to or greater than a predetermined threshold value, by means of icons, and shows other applications by means of character strings, and displays the menu screen on the display unit.

## Description

### Technical Field

The present invention relates to an information processing device, a control method therefor, and a program for displaying menu screens.

### Background Art

Normally, many applications are installed in an information processing device such as a smartphone or tablet terminal. The user is further able to freely add applications to the information processing device. Many of such information processing devices have a function for displaying a menu screen composed of a list of icons that indicate applications by means of symbols or designs such that an application that is to be used can be easily selected. The use of icon that is a symbol or a design that corresponds to the content of an application enables the user to intuitively comprehend the content of the application.

However, when the number of applications installed in an information processing device increases, the number of icons on the menu screen also increases, with the result that the user must expend some time and effort to select a desired application. Therefore, techniques are being investigated to improve operability when selecting an application on a menu screen.

For example, Patent Document 1 (JP 2005-309933 A) discloses a technique in which, in an information processing device that is equipped with a plurality of applications, the frequency of use of each application is detected and icons representing applications having a high frequency of use are displayed larger on the menu screen and icons representing applications having a low frequency of use are displayed smaller.

### Related Art Documents

### Patent Documents

### Summary of the Invention

### Problem to be Solved by the Invention

In the technique disclosed in Patent Document 1, the designs of icons that are displayed smaller become difficult to see, with the result that the applications represented by these icons become difficult to recognize. Therefore, the technique disclosed in Patent Document 1 fails to achieve sufficient improvement of the operability for users when selecting an application on a menu screen.

The object of the present invention is to provide an information processing device, a control method, and a program that can improve the operability for users when selecting an application on a menu screen.

### Means for Solving the Problem

In order to achieve the above object, the information processing device of the present invention is an information processing device that is equipped with a plurality of applications, comprising:
a display unit that displays a menu screen for selecting an application from among the plurality of applications; and
a control unit that detects the frequency of use of each of the plurality of applications, that generates a menu screen that shows, from among the plurality of applications, applications in which the detected frequency of use is equal to or greater than a predetermined threshold value, by means of icons, and shows other applications by means of character strings, and that displays this menu screen on the display unit.

In order to achieve the above object, the control method of the information processing device is a control method of an information processing device that is equipped with a plurality of applications and that has a display unit that displays a menu screen for selecting an application from among the plurality of applications, comprising:
detecting the frequency of use of each of the plurality of applications, generating a menu screen that shows, from among the plurality of applications, applications in which the detected frequency of use is equal to or greater than a predetermined threshold value, by means of icons, and shows other applications by means of character strings, and displaying the menu screen on the display unit.

In order to achieve the above object, the program of the present invention for causing a computer in an information processing device that is equipped with a plurality of applications and that has a display unit that displays a menu screen for selecting an application from among the plurality of applications to execute:
a process of detecting the frequency of use of each of the plurality of applications, generating a menu screen that shows, from among the plurality of applications, applications in which the detected frequency of use is equal to or greater than a predetermined threshold value, by means of icons, and shows the other applications by means of character strings, and displaying this menu screen on the display unit.

### Effect of the Invention

The present invention enables improving operability when selecting an application on a menu screen.

### Brief Description of the Drawings

FIG. 1 shows the configuration of an information processing system of an exemplary embodiment of the present invention.
FIG. 2 is a block diagram showing the essential configuration of the information processing device shown in FIG. 1.
FIG. 3 is a block diagram showing the essential configuration of the recommended application information generation server shown in FIG. 1.
FIG. 4 shows an example of the setting information input screen that is displayed on the display unit shown in FIG. 2.
FIG. 5 shows an example of the schedule input screen that is displayed on the display unit shown in FIG. 2.
FIG. 6 shows an example of the configuration of frequency of use information.
FIG. 7 shows an example of the configuration of popular application information.
FIG. 8 shows an example of the configuration of recommended application information.
FIG. 9 is a flow chart showing the operations of the recommended application information generation server and information processing device shown in FIG. 1.
FIG. 10 shows an example of the menu screen that is displayed on the display unit shown in FIG. 2.
FIG. 11 shows an example of the menu screen that is generated by the menu screen generation unit shown in FIG. 2.
FIG. 12A shows an example of the menu screen that is generated by the menu screen generation unit shown in FIG. 2 for each use case.
FIG. 12B shows an example of the menu screen that is generated by the menu screen generation unit shown in Fig. 2 for each use case.
FIG. 12C shows an example of the menu screen that is generated by the menu screen generation unit shown in Fig. 2 for each use case.

### Exemplary Embodiments

Exemplary embodiments for carrying out the present invention are next described with reference to the accompanying drawings.

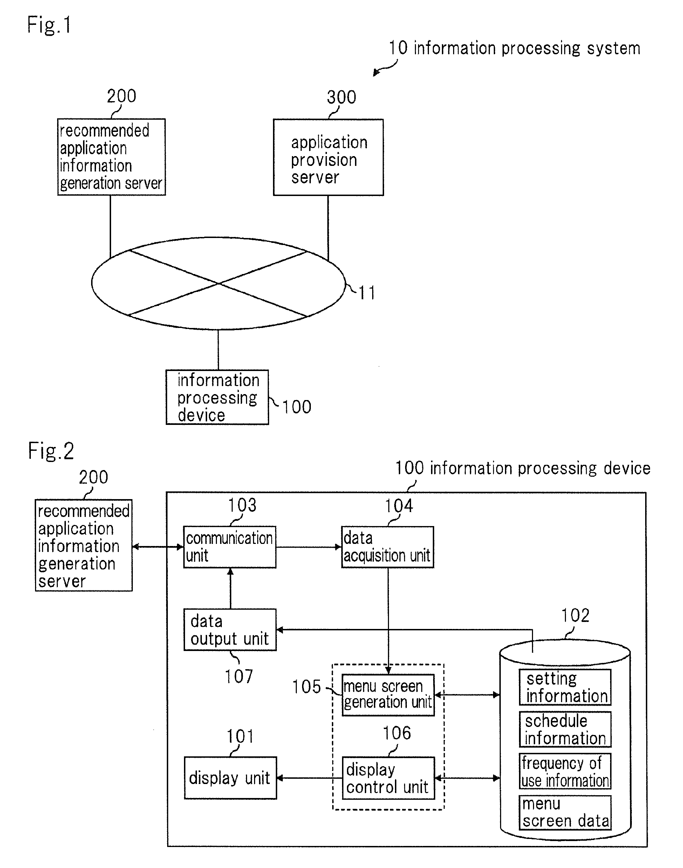

FIG. 1 shows the configuration of information processing system 10 of an exemplary embodiment of the present invention.

Information processing system 10 shown in FIG. 1 includes information processing device 100, recommended application information generation server 200, and application provision server 300 that are connected together by way of network 11. Although only one information processing device 100 is shown in FIG. 1, a plurality of information processing devices 10 may actually be provided.

A plurality of applications is installed in information processing device 100. Information processing device 100 executes applications according to input from the user. Specific examples of information processing device 100 include a mobile telephone, a smartphone, a tablet terminal, a personal computer, and a PDA (Personal Digital Assistant).

Recommended application information generation server 200 acquires frequency of use information that indicates the frequency of use (number of activations) of each application from information processing device 100. In addition, recommended application information generation server 200 identifies recommended applications in which the potential of use is high based on the frequency of use information that was acquired, and outputs to information processing device 100 recommended application information that indicates recommended applications that have been identified.

Application provision server 300 stores application programs and transmits to information processing device 100 application programs according to requests from information processing device 100.

Next, the configurations of information processing device 100 and recommended application information generation server 200 are described. Application provision server 300 may be of any configuration that is provided with the function for storing application programs and the function for communicating with information processing device 100 and recommended application information generation server 200. The configuration of application provision server 300 that is equipped with these functions is well known to one of ordinary skill in the art and explanation is therefore here omitted.

First, the configuration of information processing device 100 is described.

FIG. 2 is a block diagram showing the essential configuration of information processing device 100.

Information processing device 100 includes display unit 101, storage unit 102, communication unit 103, data acquisition unit 104, menu screen generation unit 105, display control unit 106, and data output unit 107. Menu screen generation unit 105 and display control unit 106 make up the control unit.

Display unit 101 displays, for example, a menu screen, a setting information input screen for inputting setting information (to be described) and a schedule input screen for inputting schedule information (to be described).

Storage unit 102 stores various types of information such as setting information and schedule information that are input by way of an input unit (not shown).

The setting information includes information relating to the life style of the user, and more specifically, includes information indicating the dates and times that the user performs specific activities. For example, the setting information is information about the user's holidays, working times, and commuting times. The setting information further includes information about the set value of the menu screen updating interval.

The schedule information is information relating to the user's schedule such as the date the user is to depart on a trip.

The setting information and schedule information are examples of date and time information.

Communication unit 103 performs wireless or wired communication with recommended application information generation server 200 and application provision server 300 by way of network 11.

Data acquisition unit 104 acquires recommended application information from recommended application information generation server 200 by way of communication unit 103 and outputs the information to menu screen generation unit 105.

Menu screen generation unit 105 sets use cases according to the life style of the user based on the setting information and schedule information that are stored in storage unit 102. Use cases include, for example, working, commuting, and traveling. In addition, menu screen generation unit 105 detects the frequency of use (number of activations) of each application for each use case, generates frequency of use information that indicates the frequency of use of each application for each use case that was detected, and stores this information in storage unit 102. In addition, menu screen generation unit 105 generates menu screens based on the frequency of use information and recommended application information and causes storage unit 102 to store menu screen data that indicate the menu screens that were generated.

Display control unit 106 carries out display control of display unit 101. More specifically, display control unit 106 acquires from storage unit 102 menu screen data of menu screens that correspond to the use case for each use case that is set by menu screen generation unit 105 and displays the menu screens on display unit 101.

Data output unit 107 acquires frequency of use information from storage unit 102 at each updating interval of the menu screen that is indicated in the setting information and transmits the acquired frequency of use information to recommended application information generation server 200 by way of communication unit 103.

Next, the configuration of recommended application information generation server 200 is described.

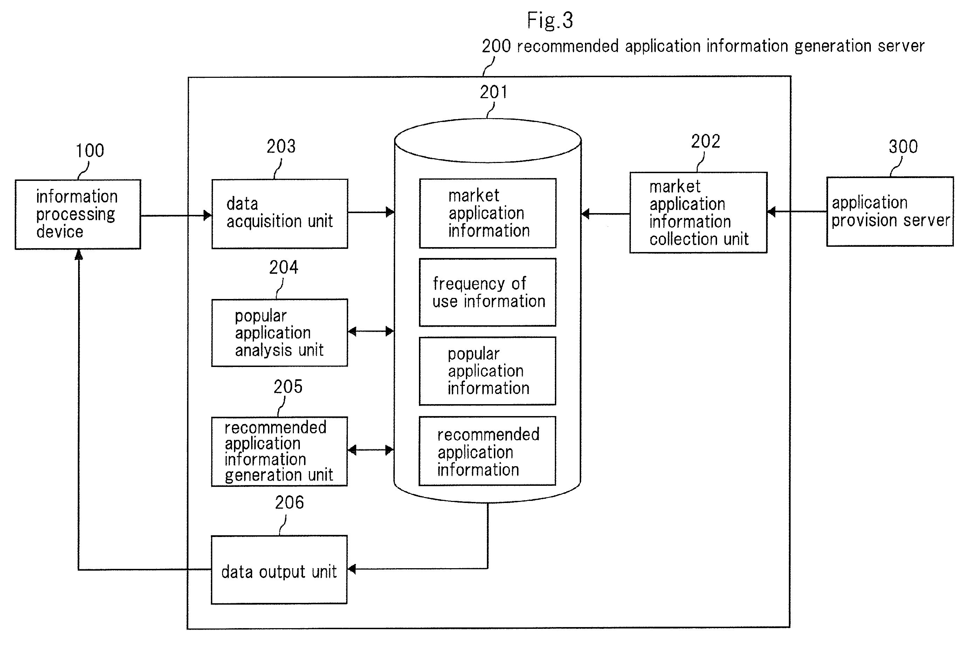

FIG. 3 is a block diagram showing the essential configuration of recommended application information generation server 200.

Recommended application information generation server 200 includes storage unit 201, market application information collection unit 202, data acquisition unit 203, popular application analysis unit 204, recommended application information generation unit 205, and data output unit 206.

Storage unit 201 stores various types of information.

Market application information collection unit 202 collects, by way of network 11, market application information in which the application names of applications that are offered by application provision server 300 are associated with the URL (Uniform Resource Locator) of the download sources of application programs, and stores this information in storage unit 201.

Data acquisition unit 203 acquires frequency of use information that is transmitted from information processing device 100 and stores this information in storage unit 201.

Popular application analysis unit 204 identifies applications which have been used a large number of times and whose popularity is high based on the frequency of use information acquired from information processing device 100. In addition, popular application analysis unit 204, based on the market application information, generates popular application information in which the application names of identified applications are associated with the URL of the download sources of the application programs, and stores this popular application information on storage unit 201.

Recommended application information generation unit 205 identifies, from among the applications included in the popular application information, those applications that are not included in the frequency of use information that was acquired from information processing device 100. In addition, recommended application information generation unit 205 generates recommended application information in which the application names that were identified are associated with the URL of the download sources of the application programs, and stores this recommended application information in storage unit 201 as recommended application information for that information processing device 100.

Data output unit 206 transmits the recommended application information for information processing device 100 to that information processing device 100.

Next, the above-mentioned setting information input screens are described.

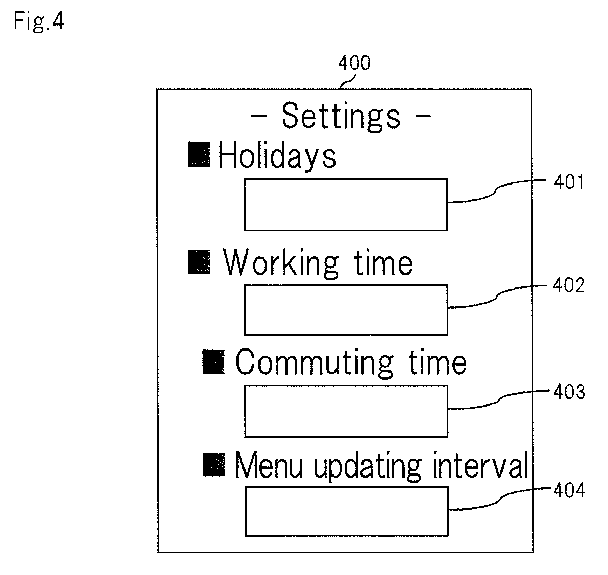

When input indicating that input of setting information is to be carried out is received by way of an input unit (not shown), display control unit 106 causes setting screen 400 shown in FIG. 4 to be displayed on display unit 101.

Setting screen 400 includes holiday input region 401, working time input region 402, commuting time input region 403, and menu screen updating interval input region 404.

Information that is input in accordance with setting screen 400 is stored in storage unit 102 as setting information. In the following explanation, setting information that indicates that the holidays are Saturday and Sunday, the working time is from 8:30 to 18:30, the commuting time is from 7:30 to 8:30, and the menu screen updating interval is one week is assumed to have been stored in storage unit 102.

Next, the above-mentioned schedule input screen is described.

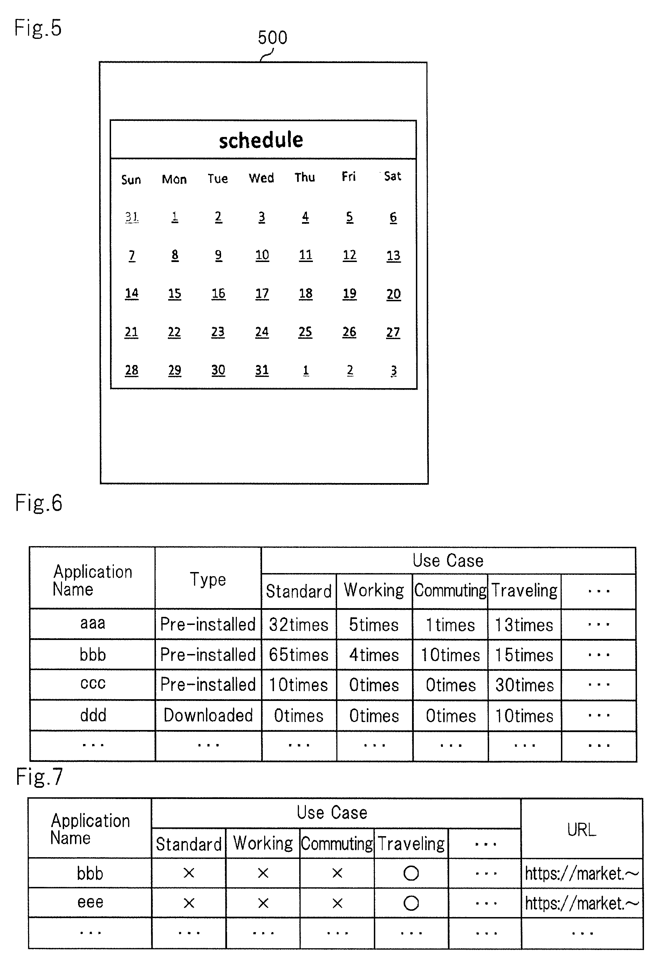

When input indicating that the schedule input is to be carried out is received by way of the input unit, display control unit 106 causes schedule input screen 500 that is shown in FIG. 5 to be displayed on display unit 101.

A calendar is displayed on schedule input screen 500, and by selecting days or intervals, the user is able to input a schedule for these days and intervals.

The schedule that is input in accordance with schedule input screen 500 is stored in storage unit 102 as schedule information. In the following explanation, information indicating that a trip is scheduled from the 15^{th} to the 19^{th} of a particular month is assumed to have been stored as schedule information.

Menu screen generation unit 105 sets use cases based on the setting information and the schedule information. As described hereinabove, information indicating that the holidays are Saturday and Sunday, working time is from 8:30 to 18:30, commuting time is from 7:30 to 8:30, and the updating interval of the menu screen is one week is stored as setting information. In addition, information indicating that a trip is scheduled from the 15^{th} to the 19^{th} of a particular month is stored as schedule information.

Based on the above-described setting information and schedule information, menu screen generation unit 105 sets the time from 8:30 to 18:30 for each day from Monday to Friday as the use case that refers to "working," sets the time from 7:30 to 8:30 for each day from Monday to Friday as the use case that refers to "commuting," sets the date from the 15^{th} to the 19^{th} for the particular month as the use case that refers to "traveling," and sets the other time blocks as the use case that refers to "standard."

Next, menu screen generation unit 105 detects the frequency of use (number of activations) of each application for each use case, generates frequency of use information, and stores the information in storage unit 102.

FIG. 6 shows an example of the configuration of the frequency of use information.

As shown in FIG. 6, the type of the application and the number of activations for each use case have been associated with the application name of each application equipped with information processing device 100. In the type of application, "pre-installed" indicates that the application has been installed from the initial state, and "downloaded" indicates that the application was installed by downloading the application program.

Next, the above-mentioned popular application information is described.

FIG. 7 shows an example of the configuration of popular application information.

As shown in FIG. 7, flags indicating whether or not an application is recommended for each use case and the URL of the download sources of the application programs are associated with the application names of applications that have been identified as having many activations and high popularity based on the frequency of use information that was acquired from information processing device 100.

From among the applications included in the frequency of use information, applications in which the type of application is "download" and in which the frequency of use is "high" are included in the popular application information.

An application is a recommended application for an use case if the flag that indicates whether or not the application is recommended is "○" for that use case, and is not a recommended application for that use case if the flag is "×." Accordingly, the application in which the application name is, for example, "ddd" in FIG. 7 is a recommended application for the use case "traveling" but is not a recommended application for other use cases (standard, working, and commuting).

Next, the recommended application information is described.

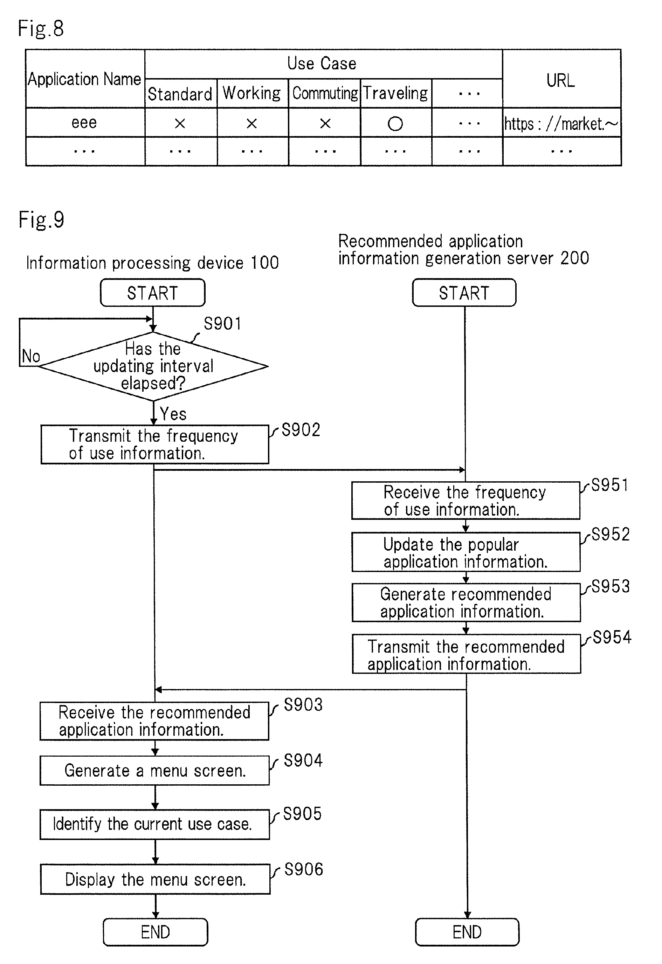

FIG. 8 shows an example of the configuration of recommended application information.

As shown in FIG. 8, flags that indicate whether or not the application is recommended in each use case and the URL of the download source of the application program are associated with the application name of the application. Here, from among the applications included in the popular application information, applications that are included in the frequency of use information that was acquired from a particular information processing device 100 have been deleted in the recommended application information for that particular information processing device 100. Accordingly, applications that have already been installed in information processing device 100 are not included in the recommended application information.

Next, the series of operations of information processing device 100 and recommended application information generation server 200 are described with reference to the flow chart shown in FIG. 9.

In information processing device 100, data output unit 107 judges whether or not the menu screen updating interval, which is indicated in the setting information, has elapsed from the time of the previous update (Step S901). At the time of the initial update, data output unit 107 judges whether or not the menu screen updating interval has elapsed from the time of input of the setting information.

If the menu screen updating interval has not elapsed (Step S901: No), data output unit 107 repeats the process of Step S901.

If the menu screen updating interval has elapsed (Step S901: Yes), data output unit 107 transmits frequency of use information that is stored in storage unit 102 by way of communication unit 103 to recommended application information generation server 200 (Step S902).

In recommended application information generation server 200, data acquisition unit 203 receives the frequency of use information that was transmitted from information processing device 100 (Step S951) and stores the information in storage unit 201.

Popular application analysis unit 204 updates the popular application information based on the frequency of use information (Step S952). Here, when an application which is not included in the popular application information is newly added, popular application analysis unit 204 makes an inquiry for the download source URL of the application to market application information collection unit 202. Market application information collection unit 202 acquires the URL of the download source of that application and stores this information as market application information in storage unit 201. Popular application analysis unit 204 stores the URL of the download source of the application program in association with the application name of the application in storage unit 201.

Next, based on the popular application information and the frequency of use information that were acquired from information processing device 100, recommended application information generation unit 205 generates recommended application information for that information processing device 100 (Step S953).

It is here assumed that popular application information is the information shown in FIG. 7, and the times-of-use information that was acquired from information processing device 100 is the information shown in FIG. 6.

From among the applications included in the popular application information, the application in which the application name is "ddd" is also included in the frequency of use information and is therefore understood to be already installed in information processing device 100. As a result, recommended application information generation unit 205 deletes, from among the applications included in the popular application information, the application in which the application name is "ddd" to generate recommended application information for that information processing device 100, as shown in FIG. 8.

Recommended application information generation unit 205 stores the recommended application information for information processing device 100 in storage unit 201, and data output unit 206 transmits this recommended application information to information processing device 100 (Step S954).

In information processing device 100, communication unit 103 receives the recommended application information that was transmitted from recommended application information generation server 200 (Step S903), and data acquisition unit 104 acquires this recommended application information and outputs the information to menu screen generation unit 105.

Upon receiving the recommended application information, menu screen generation unit 105 acquires the frequency of use information from storage unit 102, and based on these items of information, generates a menu screen (Step S904).

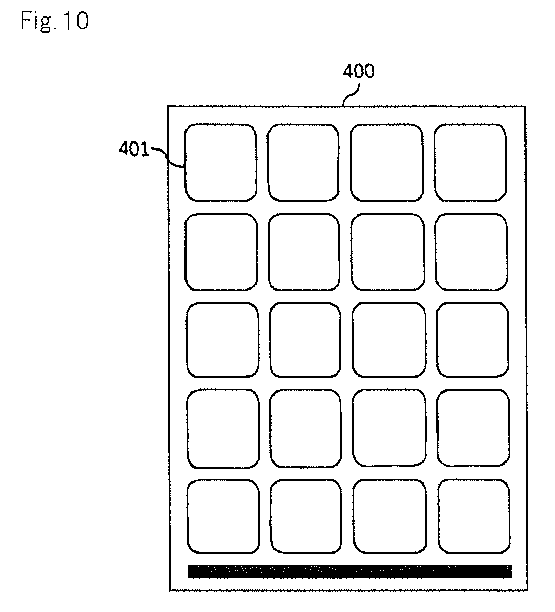

In the initial state, menu screen 400 composed of a list of icons 401 indicating each application that is installed in information processing device 100 is displayed as shown in FIG. 10.

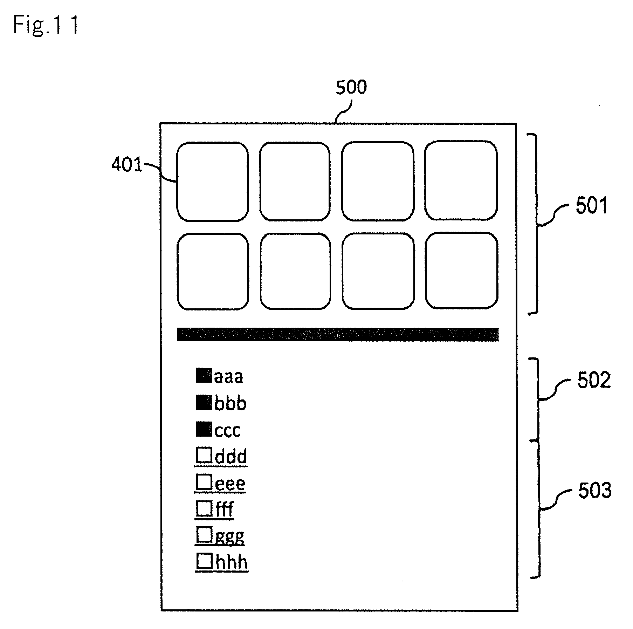

Based on the frequency of use information, menu screen generation unit 105 identifies applications in which the frequency of use is equal to or greater than a predetermined threshold value from among the applications that are installed in information processing device 100. Next, menu screen generation unit 105 divides menu screen 500 into the following three areas: icon area 501, character string area 502, and recommended application display area 503, as shown in FIG. 11. Furthermore, menu screen generation unit 105 generates a menu screen that shows the identified applications by means of icons 401 in icon area 501; shows from among the applications that are installed in information processing device 100, applications other than the identified applications by means of character strings in character string area 502; and, shows the application names of the applications shown in the recommended application information by means of character strings in recommended application display area 503. In addition, menu screen generation unit 105 appends "■" in front of the character strings that indicate applications other than the applications in which the frequency of use is equal to or greater than the predetermined threshold value and appends "□" in front of character strings that indicate recommended applications. In this way, applications other than applications in whihc the frequency of use is equal to or greater than the predetermined threshold value can be distinguished from recommended applications.

When there are many applications in which the frequency of use is equal to or greater than the predetermined threshold value, and, when all of the applications inwhich the frequency of use is equal to or great than the predetermined threshold value are shown by means of icons, the entire menu screen may be filled with incons. Therefore, menu screen generation unit 105 generates a menu screen that shows, by icons, no more than the predetermined number of the applications in which the frequency of use is equal to or greater than the predetermined threshold value.

In addition, menu screen generation unit 105 generates a menu screen that shows, from among the applications in which the frequency of use is equal to or greater than the predetermined threshold value, a predetermined number of applications, by means of icons, prioritized in the order of frequency of use.

As shown in FIG. 11, by showing applications having higher frequency of use by means of icons 401, the applications can be made more conspicuous, thereby facilitating selection by the user. Further, displaying the other applications by means of character strings facilitates comprehension of the content of the applications. As a result, the selection of applications having a low frequency of use is also facilitated, and improved operability when selecting an application on a menu screen can be achieved.

In the menu screen shown in FIG. 11, upon input indicating that icon 401 that is displayed in icon area 501 has been selected, the application indicated by that icon 401 is activated. In addition, upon input that indicates that a character string that is displayed in character string area 502 has been selected, the application that is indicated by that character string is activated. Still further, upon input that indicates that a character string that is displayed in recommended application display area 503 has been selected, the URL that was associated with the application name that is indicated by that character string in the recommended application information is accessed and the application program is downloaded.

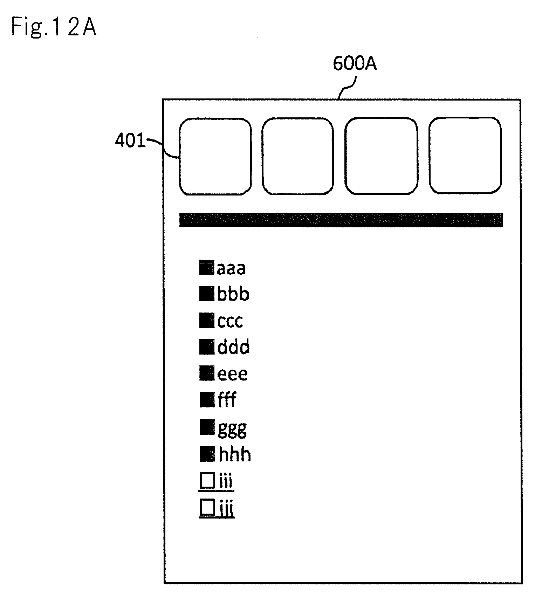

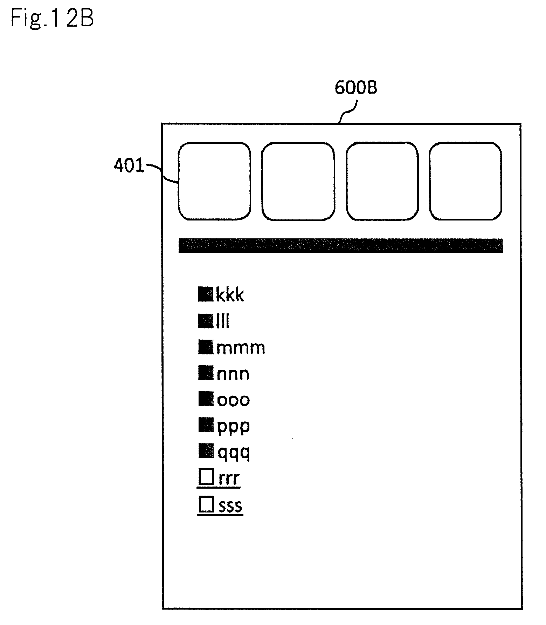

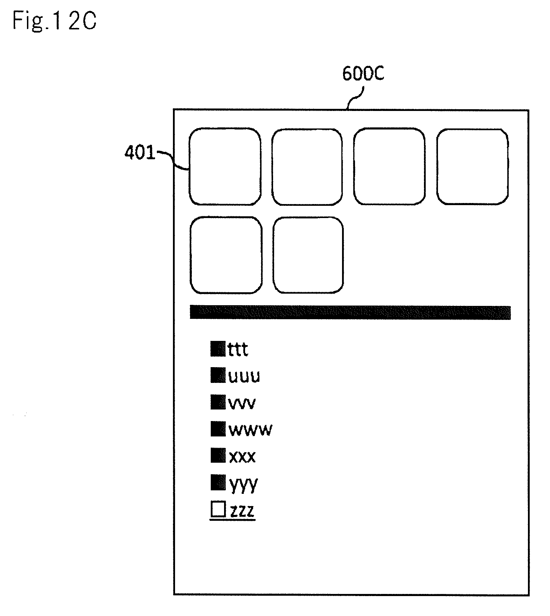

Menu screen generation unit 105 generates, for each use case that has been set, a menu screen based on frequency of use information in each use case and recommended application information. Accordingly, a menu screen is generated corresponding to each use case. FIGs. 12A-12C show example of menu screens that are generated corresponding to each use case. FIG. 12A shows menu screen 600A that corresponds to the use case that refers to "working"; FIG. 12B shows menu screen 600B that corresponds to the use case that refers to "commuting", and FIG. 12C shows menu screen 600C that corresponds to the use case that refers to "traveling".

Menu screen generation unit 105 stores menu screen data that shows the menu screens that have been generated corresponding to each use case in storage unit 102.

Next, display control unit 106 identifies the current use case (Step S905). If it is now, for example, 15:00 on Monday, display control unit 106 identifies the current use case as the use case "working" because the time from 8:30 to 18:30 from Monday to Friday has been set as the use case "working".

Next, display control unit 106 acquires menu screen data of the menu screen that corresponds to the identified use case from storage unit 102 and displays the menu screen on display unit 101 (Step S906). Accordingly, when display control unit 106 has identified the current use case as, for example, the use case that refers to "working", menu screen 600A shown in FIG. 12A is displayed on display unit 101.

In addition, display control unit 106 periodically identifies the use case, and when the use case changes, alters the menu screen that is displayed on display unit 101 to accord with this change. Accordingly, display control unit 106 identifies a change of the use case from the use case that refers to "working" to the use case that refers to "commuting," menu screen 600B shown in FIG. 12B is displayed on display unit 101.

Thus, according to the present exemplary embodiment, information processing device 100 detects the frequency of use of each of a plurality of applications, generates a menu screen that shows, from among this plurality of applications, applications in which the detected frequency of use is equal to or greater than a predetermined threshold value, by means of icons, and shows the other applications by means of character strings, and displays this menu screen on display unit 101.

By displaying icons for applications having higher frequency of use, these applications can be made more conspicuous and thereby facilitate selection by the user. In addition, by displaying character strings of the application names for the other applications, the content of these applications is more readily comprehended. As a result, the selection of applications having low frequency of use is facilitated, and an improved operability when selecting applications on a menu screen can be achieved.

According to the present exemplary embodiment, information processing device 100 sets use cases according to life patterns of the user based on setting information that is input in advance, generates menu screens according to the frequency of use of each application for each of these use cases, and displays these menu screens on display unit 101.

The applications used by a user typically differ according to the use case. As a result, the frequency of use of each application is detected for each use case, and icons indicating applications having higher frequency of use in each use case can be displayed on the menu screen, whereby improved operability when selecting an application on a menu screen can be achieved.

According to the present exemplary embodiment, information processing device 100 transmits frequency of use information to recommended application information generation server 200, and applications that are indicated in the recommended application information that was generated based on the frequency of use information are displayed on the menu screen by means of character strings.

In recent years, many applications are being offered by way of application provision server 300. A user will encounter difficulty in selecting, from among this multiplicity of applications, an application that is appropriate to an use case. As a result, applications that are indicated in recommended application information that has been generated based on frequency of use information for each use case are displayed on a menu screen for each use case to facilitate the selection of an appropriate application according to the use case.

Although explanation has been presented in the present exemplary embodiment using an example in which information regarding holidays, working times, and commuting times is input as setting information and an use case that refers to "working" and an use case that refers to "commuting" are set, the present invention is not limited to this form. For example, when the user of the information processing device is a child, the child's parent may set the use case as "in school," the use case as "on the way to school," and the use case as "after 20:00" to set the applications that can be used in each use case. In this case, icons that indicate applications that have been set as usable in an use case are displayed in the icon area of the menu screen, and character strings indicating other applications are displayed in the character string area. In this case, an application indicated by a character string will not be activated even when selected. Although character strings indicating recommended applications are displayed in the recommended application display area (however, applications in which there is a change are excluded), the application program of an application that is indicated by a character string will not be downloaded even though the character string is selected.

In the present exemplary embodiment, moreover, explanation has been presented using an example in which holidays, working times, commuting times, and updating intervals were input as setting information, but the present invention is not limited to this form. By inputting more information such as the user's gender, age, and occupation as setting information, the use cases can be subdivided. Further, in the present exemplary embodiment, explanation has been presented using an example in which the use case was identified based on the current time, but the present invention is not limited to this form. For example, a GPS (Global Positioning System) function may be installed in information processing device 100, location of the home or company input as setting information, and the use case that refers to "commuting" or the use case that refers to "working" then judged based on the position of information processing device 100 that is determined by the GPS function.

The method that is carried out in the information processing device of the present invention may be applied to a program that is executed by a computer. In addition, this program can be stored on a recording medium, and further, can be provided to the outside by way of a network.

Although the invention of the present application has been described with reference to exemplary embodiments, the present invention is not limited to the above-described exemplary embodiments. The configuration and details of the invention of the present application are open to various modifications within the scope of the invention of the present application that will be clear to one of ordinary skill in the art.

The present application claims priority based on Japanese Patent Application No. 2012-150314, filed on July 4, 2012, the entire content of which is incorporated herein by reference in its entirely.

The whole or part of the above-described exemplary embodiments disclosed above can be described as, but not limited to, the following supplementary notes.

### (Supplementary note 1)

An information processing device that is equipped with a plurality of applications, comprising:
a display unit that displays a menu screen for selecting an application from among the plurality of applications; and
a control unit that detects the frequency of use of each of the plurality of applications, that generates a menu screen that shows, from among the plurality of applications, applications in which the detected frequency of use is equal to or greater than a predetermined threshold value, by means of icons, and shows other applications by means of character strings, and that displays the menu screen on the display unit.

### (Supplementary note 2)

The information processing device according to Supplementary note 1, wherein:
the control unit sets use cases based on date and time information that is input in advance by the user and that indicates the dates and times that the user carries out specific activities, detects the frequency of use of each of the plurality of applications for the use cases that have been set, generates a menu screen according to the frequency of use that was detected, and displays the menu screen according to the use case on the display unit.

### (Supplementary note 3)

The information processing device according to Supplementary note 1 or 2, further comprising:
a communication unit that can connect by way of a network with a server that identifies recommended applications according to the frequency of use of a plurality of applications and that outputs recommended application information that indicates the identified applications;
wherein the control unit transmits to the server by way of the communication unit frequency of use information that indicates the frequency of use of each of the plurality of applications that was detected, and upon receiving by way of the communication unit the recommended application information that was transmitted from the server according to the transmission of the frequency of use information, generates a menu screen that further shows, by means of character strings, applications that are indicated in the recommended application information.

### (Supplementary note 4)

The information processing device according to any one of Supplementary notes 1 to 3, wherein:
the control unit generates a menu screen that shows, from among applications that the detected frequency of use is equal to or greater than a predetermined threshold value, no more than a predetermined number of applications, by means of icons, and shows the other applications by means of character strings.

### (Supplementary note 5)

A control method of an information processing device that is equipped with a plurality of applications and that has a display unit that displays a menu screen for selecting an application from among the plurality of applications, comprising:
detecting the frequency of use of each of the plurality of applications, generating a menu screen that shows, from among the plurality of applications, applications in which the detected frequency of use is equal to or greater than a predetermined threshold value, by means of icons, and shows other applications by means of character strings, and displaying the menu screen on the display unit.

### (Supplementary note 6)

The control method of the information processing device according to Supplementary note 5, further comprising:
setting use cases based on date and time information that is input in advance by the user and that shows the dates and times that the user performs specific activities, detecting the frequency of use of each of the plurality of applications for each use case that has been set, generating menu screens according to the detected frequency of use, and displaying the menu screens that accord with the use cases on the display unit.

### (Supplementary note 7)

The control method of the information processing device according to Supplementary note 5 or 6, further comprising:
transmitting frequency of use information that indicates the frequency of use of each of the plurality of applications that was detected to a server that identifies recommended applications according to the frequency of use of the plurality of application and that outputs recommended application information that indicates the applications that were identified; and
upon receiving the recommended application information that was transmitted from the server according to the transmission of the frequency of use information, generating a menu screen that further shows applications that are indicated in the recommended application information by means of character strings.

### (Supplementary note 8)

The control method of an information processing device according to any one of Supplementary notes 5 to7, further comprising:
generating a menu screen that shows, from among the applications that the detected frequency of use is equal to or greater than a predetermined threshold value, no more than a predetermined number of applications, by means of icons, and that shows the other applications by means of character strings.

### (Supplementary note 9)

A program for causing a computer in an information processing device that is equipped with a plurality of applications and that has a display unit that displays a menu screen for selecting an application from among the plurality of applications, to execute:
a process of detecting the frequency of use of each of the plurality of applications, generating a menu screen that shows, from among the plurality of applications, applications in which the detected frequency of use is equal to or greater than a predetermined threshold value, by means of icons, and that shows other applications by means of character strings, and displaying the menu screen on the display unit.

## Claims

1. An information processing device that is equipped with a plurality of applications, comprising:
a display unit that displays a menu screen for selecting an application from among said plurality of applications; and
a control unit that detects the frequency of use of each of said plurality of applications, that generates a menu screen that shows, from among said plurality of applications, applications in which said detected frequency of use is equal to or greater than a predetermined threshold value, by means of icons, and shows other applications by means of character strings, and that displays said menu screen on said display unit.

2. The information processing device according to claim 1, wherein:
said control unit sets use cases based on date and time information that is input in advance by the user and that indicates the dates and times that said user carries out specific activities, detects the frequency of use of each of said plurality of applications for use cases that have been set, generates said menu screen according to the frequency of use that was detected, and displays menu screens according to said use cases on said display unit.

3. The information processing device according to claim 1 or 2, further comprising:
a communication unit that can connect by way of a network with a server that identifies recommended applications according to the frequency of use of said plurality of applications and that outputs recommended application information that indicates the identified applications;
wherein said control unit transmits to said server by way of said communication unit frequency of use information that indicates the frequency of use of each of said plurality of applications that was detected, and upon receiving by way of said communication unit said recommended application information that was transmitted from said server according to the transmission of said frequency of use information, generates a menu screen that further shows, by means of character strings, applications that are indicated in the recommended application information.

4. The information processing device according to any one of claims 1 to 3, wherein:
said control unit generates a menu screen that shows, from among applications that said frequency of use that was detected is equal to or greater than a predetermined threshold value, no more than a predetermined number of applications, by means of icons, and shows other applications by means of character strings.

5. A control method of an information processing device that is equipped with a plurality of applications and that has a display unit that displays a menu screen for selecting an application from among the plurality of applications, comprising:
detecting the frequency of use of each of said plurality of applications, generating a menu screen that shows, from among said plurality of applications, applications that said detected frequency of use is equal to or greater than a predetermined threshold value by means of icons and shows other applications by means of character strings, and displaying said menu screen on said display unit.

6. The control method of the information processing device according to claim 5, further comprising:
setting use cases based on date and time information that is input in advance by a user and that shows the dates and times that said user performs specific activities, detecting the frequency of use of each of said plurality of applications for each use case that has been set, generating said menu screen according to the detected frequency of use, and displaying said menu screens that accord with said use cases on said display unit.

7. The control method of the information processing device according to claim 5 or 6, further comprising:
transmitting frequency of use information, which indicates the frequency of use of each of said plurality of applications that was detected, to a server that identifies recommended applications according to the frequency of use of said plurality of applications and that outputs recommended application information that indicates the applications that were identified; and
upon receiving said recommended application information that was transmitted from said server according to the transmission of said frequency of use information, generating a menu screen that further shows applications that are indicated in the recommended application information by means of character strings.

8. The control method of an information processing device according to any one of claims 5 to 7, further comprising:
generating a menu screen that shows, from among applications that said detected frequency of use is equal to or greater than a predetermined threshold value, no more than a predetermined number of applications, by means of icons, and shows other applications by means of character strings.

9. A program for causing a computer in an information processing device that is equipped with a plurality of applications and which has a display unit that displays a menu screen for selecting an application from among the plurality of applications, to execute:
a process of detecting the frequency of use of each of said plurality of applications, generating a menu screen that shows, from among said plurality of applications, applications in which said detected frequency of use is equal to or greater than a predetermined threshold value, by means of icons, and that shows other applications by means of character strings, and displaying said menu screen on said display unit.
